# EUROPÄISCHE PATENTSCHRIFT

(11) **EP 0 828 181 B1**
(45) Veröffentlichungstag und Bekanntmachung des Hinweises auf die Patenterteilung: **25.10.2000**
(21) Anmeldenummer: 96810593.2
(22) Anmeldetag: 09.09.1996
(51) Int. Cl.: G03B 27/58

(54) **Verfahren und Vorrichtung zum Aufkopieren von fotografischen Kopiervorlagen auf blattförmiges Kopiermaterial**
Method and device for copying photographic originals onto sheet-like copying material
Procédé et dispositif pour copier des originaux photographiques sur du matériau en feuille pour l'enregistrement

(43) Veröffentlichungstag der Anmeldung: 11.03.1998
(73) Patentinhaber: GRETAG IMAGING AG, CH-8105 Regensdorf (CH)
(72) Erfinder: Wacker, Rudolf, 5022 Rombach (CH)
(74) Vertreter: Schwabe - Sandmair - Marx

(56) Entgegenhaltungen:
- US-A- 4 389 117
- US-A- 4 916 479
- US-A- 5 335 045

## Beschreibung

Die Erfindung betrifft ein Verfahren und eine Vorrichtung zum Aufkopieren von fotografischen Kopiervorlagen auf blattförmiges Kopiermaterial gemäss dem Oberbegriff des jeweiligen unabhängigen Patentanspruchs.

Fotografische Kopierverfahren und Kopiergeräte sind heutzutage in unzähligen Varianten bereits im Einsatz. In der weitaus häufigsten Anwendung werden dabei die Bildfelder eines Negativfilms auf Fotopapier aufkopiert. Geräteseitig wird dabei grundsätzlich unterschieden zwischen sogenannten Hochleistungsprintern (oder Hochleistungsstrassen), die im wesentlichen nur die am häufigsten vorkommenden Formate von Papierbildern in einer sehr grossen Stückzahl herstellen, und den sogenannten Minilabs, deren Haupteinsatzgebiet die Herstellung besonderer Formate von Papierbildern ist, wie sie im Profibereich vorkommen, die aber auch für kleinere bzw. mittlere Stückzahlen von Formaten, die sehr häufig vorkommen, geeignet sind.

Die Formate, die im Profibereich gewünscht werden, sind oft unterschiedlich, sodass im Minilabbereich eine Verarbeitung von bandförmigem Kopiermaterial, also von bandförmigem Fotopapier, in der Praxis nicht zweckdienlich ist. Daher wird im Minilabbereich in der Regel mit blattförmigem Kopiermaterial, also mit einzelnen Blättern von Fotopapier, gearbeitet. Die einzelnen Blätter entsprechen von ihren Abmessungen dabei dem gewünschten Format des Papierbilds. Da die Negative in der Regel alle die gleichen Abmessungen aufweisen, wird der Abbildungsmassstab bei der Vergrösserung entsprechend verändert, um die gewünschte Grösse des Papierbilds zu erhalten.

Im Grundsatz arbeitet ein Minilab derart, dass zunächst das zu kopierende Negativ abgetastet wird (mit einem Scanner) und mit Hilfe der gewonnenen Abtastwerte die erforderlichen Kopierlichtmengen ermittelt werden. Nachdem die erforderlichen Kopierlichtmengen ermittelt sind, wird das zu kopierende Negativ auf einer Filmbühne in den Belichtungsstrahlengang geführt und der erforderliche Abbildungsmassstab eingestellt. Gleichzeitig wird das unbelichtete Blatt Fotopapier mit dem gewünschten Format auf einer Papierbühne ebenfalls in den Belichtungsstrahlengang transportiert. Dieser Vorgang erfolgt, ohne dass das Fotopapier mit Kopierlicht beaufschlagt wird (z.B. wird das Licht der Kopierlampe durch eine Blende blockiert). Sind das zu kopierende Negativ und das Blatt Fotopapier in die entsprechende Kopierposition gelangt, wird das Kopierlicht freigegeben und das Negativ mit den zuvor ermittelten Kopierlichtmengen auf das Fotopapier aufkopiert. Anschliessend wird das von der Kopierlampe kommende Licht wieder blockiert und das belichtete Fotopapier wird von der Papierbühne abtransportiert und weiterbearbeitet.

Der oben beschriebene Vorgang erfolgt dabei so, dass ein Blatt Fotopapier auf die Papierbühne transportiert wird, dann das Aufkopieren des Negativs auf das Fotopapier erfolgt, anschliessend das belichtete Fotopapier von der Papierbühne abtransportiert wird. Ist dieser Vorgang abgeschlossen, wird das nächste Blatt Fotopapier auf die Papierbühne transportiert, sodann das entsprechende Negativ aufkopiert, anschliessend das belichtete Fotopapier von der Papierbühne abtransportiert, und so weiter. Auf der Papierbühne befindet sich also zu einem bestimmten Zeitpunkt immer nur ein Blatt Papier. Bei einem Kopiergerät, das nur zur Herstellung einer kleinen Formatvielfalt der Kopien vorgesehen ist, bei dem also die Papierbühne auch mit den kleinen Formaten noch gut ausgenutzt ist, ist diese Vorgehensweise akzeptabel. Soll hingegen eine grosse Formatvielfalt erstellt werden, ist die Ausnutzung der Papierbühne speziell bei den kleinen Formaten sehr schlecht. Gleichwohl treten die kleinen Formate mit einer bestimmten Häufigkeit auf, sodass die Effizienz des Geräts entsprechend verbesserungswürdig ist.

Es ist daher eine Aufgabe der Erfindung, ein Verfahren und eine Vorrichtung vorzuschlagen, bei welchem auch bei einer grossen Vielfalt von Formaten der Blätter des Kopiermaterials (Fotopapiers) die Papierbühne effizient genutzt wird und somit die Effizienz des gesamten Geräts, speziell auch bei den kleinen Formaten, deutlich gesteigert wird.

Diese Aufgabe wird durch die Merkmale der unabhängigen Patentansprüche gelöst. Bereits während des Abtransports des belichteten blattförmigen Kopiermaterials wird also schon das nächste Stück unbelichtetes blattförmiges Kopiermaterial auf die Belichtungsbühne transportiert. Auf diese Weise wird die Papierbühne insbesondere bei solchen Formaten des Fotopapiers, die die Papierbühne nur zu einem kleinen Teil ausfüllen, deutlich effizienter genutzt.

Besonders vorteilhafte Ausgestaltungen des erfindungsgemässen Verfahrens bzw. der erfindungsgemässen Vorrichtung ergeben sich aus den abhängigen Ansprüchen. Diese Varianten zeichnen sich z.B. dadurch aus, dass das belichtete blattförmige Kopiermaterial nach seinem Abtransport an Übergabemittel weitergegeben wird, die das Kopiermaterial mit einer Transportgeschwindigkeit an eine nachgeschaltete Vorrichtung, insbesondere an einen Papierprozessor, weitergeben bzw. weitertransportieren, gleich oder grösser ist als die durchnittliche einem Zyklus des Transportierens auf die Belichtungsbühne, des Belichtens und des Abtransportierens entsprechende Geschwindigkeit. Vorrichtungsmässig sind hierzu Übergabemittel vorgesehen, welche den Transportmitteln nachgeschaltet sind und an welche die Transportmittel das belichtete blattförmige Kopiermaterial nach seinem Abtransport weitergeben. Diese Übergabemittel sind ihrerseits mit Transportmitteln versehen, die das Kopiermaterial mit einer Transportgeschwindigkeit weitergeben bzw. weitertransportieren, die gleich oder grösser ist als die dem oben beschriebenen Zyklus entsprechende durchschnittliche Geschwindigkeit.

Weitere Varianten zeichnen sich dadurch aus, dass das unbelichtete Kopiermaterial bandförmig bereitgestellt und erst kurz vor dem Transport auf die Belichtungsbühne auf ein blattförmiges Format zugeschnitten wird. Vorrichtungsmässig ist hierzu ein Speicher zum Bereitstellen des unbelichtetetn Kopiermaterials in Form eines Bandes vorgesehen, sowie Schneidemittel, die das Band erst kurz vor dem Transport des Kopiermaterials auf die Belichtungsbühne auf ein blattförmiges Format zuschneiden.

Im folgenden wird die Erfindung anhand der Zeichnungs erläutert. Darin zeigen in schematischer Darstellung:
- Fig. 1: eine Ausführungsvariante des erfindungsgemässen Kopierverfahrens in Form eines Ablaufdiagramms,
- Fig. 2: eine Ausführungsvariante einer erfindungsgemässen Kopiervorrichtung (stark schematisiert) mit nachgeschaltetem Papierprozessor
und
- Fig. 3: eine Ausführungsvariante der wesentlichen Teile eines erfindungsgemässen Kopiergeräts in perspektivischer Darstellung.

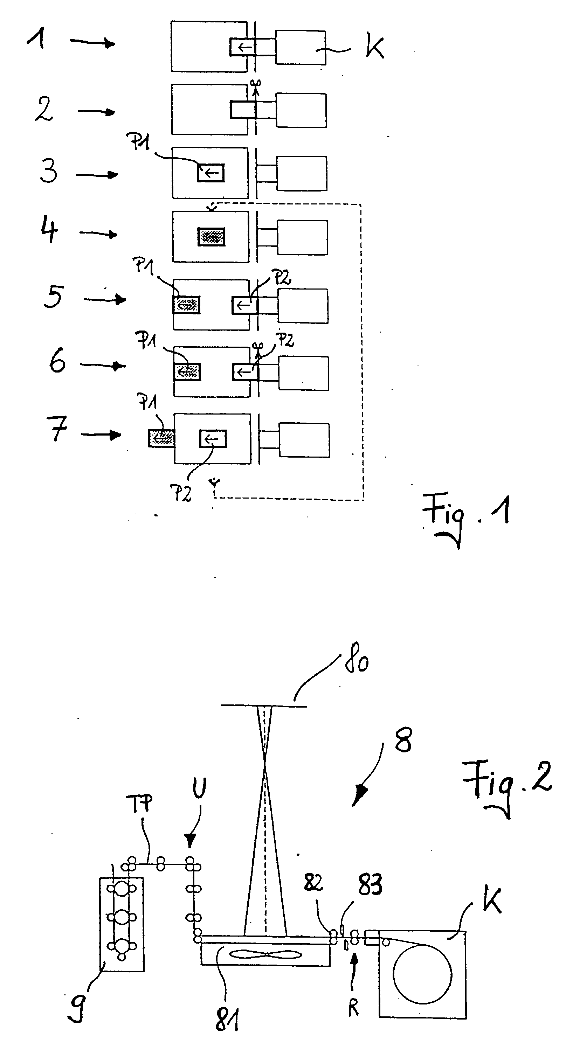

Eine Ausführungsvariante des erfindungsgemässen Verfahrens ist in einem Ablaufdiagramm in Fig. 1 dargestellt. In einem ersten Schritt 1 wird unbelichtetes Fotopapier mit der Breite des gewünschten Formats aus einer Papierkassette K um die Länge des gewünschten Formats herausgezogen. Das unbelichtete Fotopapier ist in der Papierkassette K in Form eines langen Bands gespeichert. In einem dem Herausziehen des Papiers nachfolgenden zweiten Schritt 2 wird das Papier zu einem ersten Papierstück P1 geschnitten, und in einem dritten Schritt 3 wird dieses Papierstück P1 in den Kopierstrahlengang transportiert. Anschliessend wird das gewünschte Negativ in einem vierten Schritt 4 auf das Papierstück P1 aufkopiert, das Fotopapier also belichtet. Nach erfolgter Belichtung wird in einem fünften Schritt 5 das belichtete Papierstück P1 abtransportiert. Gleichzeitig mit dem Abtransportieren des belichteten Papierstücks P1 wird im Schritt 5 bereits wieder neues unbelichtetes Fotopapier um die Länge des gewünschten Formats aus der Papierkassette K herausgezogen. In einem nachfolgenden Schritt 6 wird das Fotopapier zu einem zweiten Papierstück P2 geschnitten, und während in einem Schritt 7 das belichtete erste Papierstück P1 endgültig die Papierbühne verlässt, ist das nachfolgende unbelichtete Papierstück P2 bereits wieder in den Kopierstrahlengang transportiert worden. Das zweite Papierstück P2 wird nun gemäss dem vierten Schritt 4 wieder belichtet und die Schleife aus den Schritten 4 bis 7 wird dann kontinuierlich weiter durchlaufen.

Das Verfahren gemäss Fig. 1 ist nur für ein Format des Papierstücks dargestellt und beschrieben (gleiche Papierbreite und Papierlänge). Entweder durch entsprechendes Auswechseln der Kassette K oder aber durch eine weiter hinten erläuterte Variante (Quertransport des entsprechenden Formats des Papierstücks zur Papierbühne mittels eines Schlittens, siehe US-A-5,335,045 bzw. EP-A-0,570,651) können aber natürlich auch Papierstücke von anderer Grösse (andere Papierbreite und Papierlänge) verarbeitet werden. Der Ablauf bleibt dabei jedoch vom Prinzip her derselbe.

Fig. 2 zeigt ein Ausführungsbeispiel einer erfindungsgemässen Kopiervorrichtung 8 mit nachgeschaltetem Papierprozessor 9, jedoch in stark schematisierter Darstellung. Die Kopiervorrichtung 8 umfasst dabei eine Filmbühne 80, auf der die Kopiervorlage, z.B. ein Negativfilm, geführt wird, eine Papierbühne 81, auf der die Papierstücke transportiert werden, sowie für diesen Zweck vorgesehene Transportmittel 82. Des weiteren sind eingangsseitig eine Papierkassette K zu erkennen sowie Schneidemittel 83, welche das in Form eines Bands bereitgestellte, unbelichtete Fotopapier in ein Stück der gewünschten Formatlänge schneiden. Das in der Papierkassette K bereitgestellte unbelichtete Fotopapier wird zwischen einem Rollenpaar R in einer definierten Position gehalten. Ausgangsseitig sind Übergabemittel U vorgesehen, welche das auf der Papierbühne 81 belichtete Papierstück P1 (Fig. 1) nach seinem Abtransport von der Papierbühne 81 zu dem Papierprozessor 9 transportieren, wo das belichtete Papierstück P1 nasschemisch entwickelt wird. In Fig. 2 ist der besseren Übersichtlichkeit halber der Transportweg TP des Papiers in einer durchgehenden Linie dargestellt, auch wenn in der Praxis immer nur einzelne blattförmige Papierstücke entlang dieses Transportwegs TP transportiert werden.

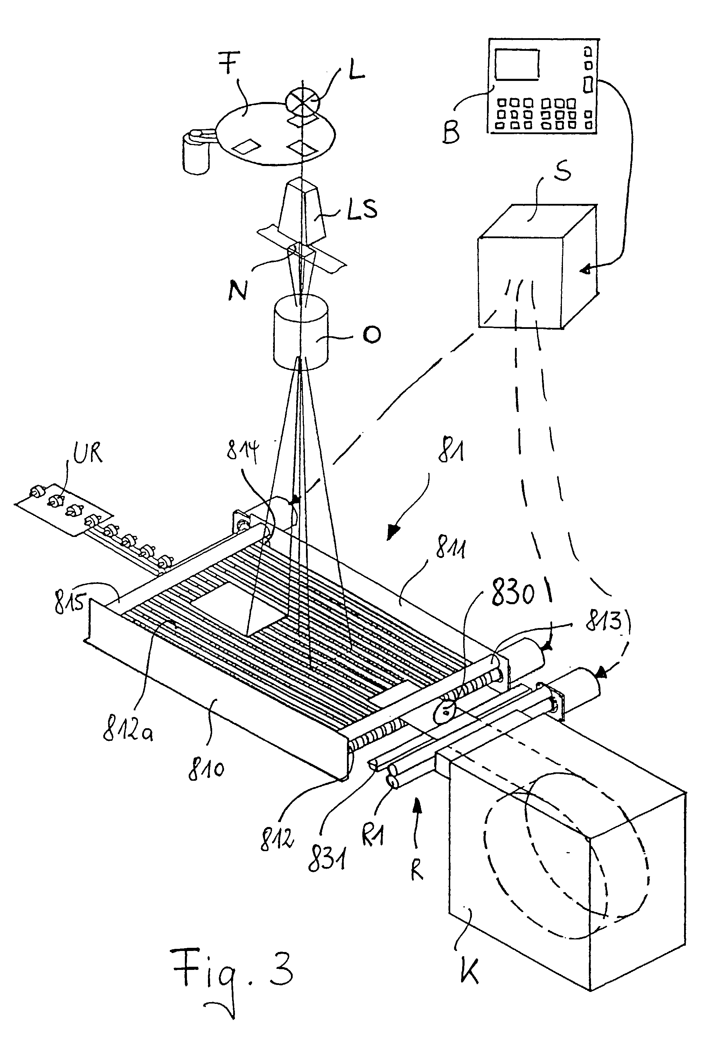

Fig. 3 zeigt die wesentlichen Teile eines Ausführungsbeispiels einer erfindungsgemässen Kopiervorrichtung, zusammen mit einer in der gewünschten Position angeordneten Papierkassette K, in welcher unbelichtetes Fotopapier in Form eines Bandes, welches zu einer Rolle gewickelt ist, bereitgestellt wird. Das Papier wird in der Ruhestellung zwischen einem Rollenpaar R gehalten, von dem die untere Rolle R1 mittels eines steuerbaren Elektromotors antreibbar ist, sodass bei Erhalt eines entsprechenden Steuersignals Papier aus der Papierkassette K herausgezogen werden kann. Im weiteren Transportweg ist ein Schneidemittel symbolisch durch ein quer zur Transportrichtung bewegbares, scharfkantiges Rad 830 und eine Auflage 831 mit einer entsprechenden Kante angedeutet, zum Schneiden des Bands in einzelne Papierstücke gewünschter Länge.

Ferner erkennt man in Fig. 3 eine Papierbühne 81, welche zwei Seitenwände 810 und 811 aufweist, deren Abstand voneinander die maximale Breite definieren, die ein zu verwendendes Fotopapier haben darf. Die Papierbühne 81 weist ferner Transportmittel für das Fotopapier auf, welche eingangsseitig angeordnete Rollen 812 und 813 umfassen, von denen die untere Rolle 812 mittels eines Elektromotors antreibbar ist. Ausgangsseitig sind ebenfalls Rollen 814 und 815 angeordnet, die jedoch nicht selbständig antreibbar sind. Um die jeweils untere Rolle 812 und 814 herum sind mehrere in Transportrichtung verlaufende Transportbänder 812a geführt, auf denen das Fotopapier transportiert wird, indem die Rolle 812 von dem Elektromotor angetrieben wird. In Transportrichtung betrachtet hinter den ausgangsseitig angeordneten Rollen 814 und 815 sind Übergabemittel angeordnet, die durch mehrere Rollen UR symbolisiert sind. Die Rollen der Übergabemittel sind ebenfalls mittels eines Elektromotors antreibbar. Die Transportgeschwindigkeit, mit welcher die Übergabemittel U das Fotopapier nach dem Abtransport von der Papierbühne 81 weitertransportieren, ist zumindest so gross wie die einem Zeitzyklus auf der Papierbühne entsprechende durchschnittliche Geschwindigkeit. Die durchschnittliche Geschwindigkeit, mit der das belichtete Fotopapier von den Übergabemitteln U transportiert wird, ist also zumindest so gross, dass während eines kompletten Zyklus auf der Papierbühne, also während der Zeit, in der ein Stück Papier in den Kopierstrahlengang transportiert, belichtet und abtransportiert wird, das an die Übergabemittel übergebene Stück Papier weitergegeben bzw. zumindest um den Weg weitertransportiert worden ist, welcher der Länge des maximal möglichen verarbeitbaren Papierformats entspricht.

Des weiteren sind in Fig. 3 noch symbolisch die für das Kopieren wesentlichen Elemente eines Kopiergeräts dargestellt. Dies sind insbesondere eine Kopierlichtquelle L, ein antreibbares Filterrad F mit z.B. drei Filtern für die Belichtung mit blauem, grünem und rotem Licht, ein Lichtschacht LS, welcher das von der Kopierlichtquelle kommende Licht auf das zu kopierenden Negativ N führt, sowie eine Abbildungsoptik O, deren Vergrösserungsmassstab variabel ist und die das Negativ auf das Fotopapier auf der Papierbühne 81 abbildet. Zur Steuerung des Kopiervorgangs ist eine Steuerung S vorgesehen und des weiteren noch eine Bedienstation B für manuellen Eingriff eines Operators, insbesondere aber zur Eingabe des jeweils gewünschten Formats des jeweiligen Papierstücks.

Das in Fig. 3 dargestellte Ausführungsbeispiel der erfindungsgemässen Vorrichtung funktioniert nun im wesentlichen wie folgt: Die Steuerung S, die (entweder von einer automatischen Ablesung oder durch manuelle Eingabe) weiss, welches Papierformat benötigt wird, erzeugt ein Steuersignal, welches den Elektromotor zum Antrieb der Rolle R1 dazu veranlasst, unbelichtetes Fotopapier aus der Papierkassette K um die gewünschte Länge vorzuschieben. Ist dies erfolgt, wird der Papiervorschub gestoppt und die Steuerung S erzeugt ein Schneidesignal, welches zur Folge hat, dass das scharfkantige Rad 830 quer zur Transportrichtung des Fotopapiers bewegt wird und das Papier auf das gewünschte Format zuschneidet. Dieses Papierstück, dessen in Transportrichtung vorderer Bereich bereits zwischen die eingangsseitigen Rollen 812 und 813 gelangt ist, wird dann in den Kopierstrahlengang transportiert. Dies erfolgt derart, dass der Elektromotor, der die Rolle 812 antreibt, ein entsprechendes Signal von der Steuerung S erhält. Ist das Papierstück in den Kopierstrahlengang gelangt, wird der Papiertransport auf der Papierbühne 81 gestoppt, das aufzukopierende Negativ N wird auf das Papierstück aufkopiert, und anschliessend wird das belichtete Papierstück abtransportiert, indem die Steuerung S ein Signal erzeugt und an den Elektromotor sendet, der die Rolle 812 antreibt.

Gleichzeitig mit dem Abtransport des belichteten Papierstücks wird bereits wieder unbelichtetes Fotopapier um die gewünschte Länge aus der Papierkassette K herausgezogen. Erreicht das bereits belichtete Papierstück das ausgangsseitige Ende der Papierbühne 81, ist das unbelichtete Papier von den Rollen R um die gewünschte Länge vorgeschoben worden und wird dann zu dem Stück mit dem gewünschten Format geschnitten (siehe Schritt 5 und Schritt 6 in Fig. 1). Mit dem anschliessenden Transport des geschnittenen Stücks in den Kopierstrahlengang wird das vorangehende belichtete Papierstück an die Übergabemittel U weitergegeben und von diesen weitertransportiert, beispielsweise zu einem Papierprozessor 9 wie in Fig. 2 gezeigt.

Die beschriebene Arbeitsweise lässt den Fachmann unmittelbar erkennen, dass die Papierbühne wesentlich effizienter genutzt wird als dies bei bisher bekannten Geräten der Fall ist und somit das gesamte Gerät effizienter genutzt wird, da der Durchsatz an Kopien deutlich höher ist. Das beschriebene Beispiel zeigt jedoch nur, wie zwei Papierstücke gleichzeitig auf der Papierbühne transportiert werden. Es besteht aber auch die Möglichkeit, die Papierstücke in ganz kurzen Abständen (z.B. 10 mm Abstand zwischen aufeinanderfolgenden Papierstücken) aufeinanderfolgen zu lassen, also noch während des Transports des vorangehenden Papierstücks in den Kopierstrahlengang bereits das nächste Papierstück abzuschneiden und an die Transportmittel der Papierbühne zu übergeben. Es können sich dann also mehrere Papierstücke gleichzeitig auf der Papierbühne befinden, die in kurzen Abständen aufeinanderfolgen. Da der Kopierstrahlengang nur geringfügig grösser ist als das jeweils gewünschte Papierformat, wird das Papierstück im Kopierstrahlengang vollständig belichtet ohne dass die Papierstücke in Warteposition belichtet werden.

Wie bereits erwähnt, ist es mit dem vorstehend beschriebenen Verfahren bzw. mit dem entsprechenden Gerät möglich, eine besonders effiziente Nutzung zu erreichen, auch dann, wenn die Formate wechseln. Im Grunde ist es nämlich auf einfache Art und Weise möglich, mehrere Kassetten mit unterschiedlicher Papierbreite bereitzustellen, das Papier mit der jeweils gewünschten Breite auf die gewünschte Länge zuzuschneiden und es dann an einen quer zur Transportrichtung verschiebbaren Schlitten zu übergeben, wie er beispielsweise in der US-A-5,335,045 (EP-A-0,570,651) beschrieben ist. Dieser Schlitten übergibt dann das Papier an die Transportmittel der Papierbühne.

## Patentansprüche

1. Verfahren zum Aufkopieren von fotografischen Kopiervorlagen auf blattförmiges fotografisches Kopiermaterial, bei welchem Verfahren die Kopiervorlage abgetastet wird und aufgrund der gewonnenen Abtastwerte die erforderlichen Kopierlichtmengen für das anschliessende Aufkopieren der Kopiervorlage auf das blattförmige Kopiermaterial ermittelt werden, wobei folgende Schritte durchgeführt werden:
a) ein unbelichtetes Stück bestimmten Formats des blattförmigen Kopiermaterials wird auf eine Bühne transportiert, die zum Belichten mit Kopierlicht von Stücken unterschiedlichen Formats des blattförmigen Kopiermaterials ausgebildet ist;
b) das Stück wird auf der Bühne in den Kopierstrahlengang transportiert;
c) das sich im Kopierstrahlengang befindliche Stück wird mit den zuvor ermittelten Kopierlichtmengen beaufschlagt, und
d) das belichtete Stück wird aus dem Kopierstrahlengang abtransportiert,
dadurch **gekennzeichnet**, daß das belichtete Stück während seines Abtransports immer noch auf der Bühne ist, während das nächste, unbelichtete Stück auf die Bühne transportiert wird.

2. Verfahren nach Anspruch 1, dadurch gekennzeichnet, dass das belichtete blattförmige Kopiermaterial nach seinem Abtransport an Übergabemittel (U) weitergegeben wird, die das Kopiermaterial mit einer Transportgeschwindigkeit an eine nachgeschaltete Station, insbesondere an eine Papierentwicklungsstation (9), weitergeben bzw. weitertransportieren, die gleich oder grösser ist als die durchschnittliche einem Zyklus des Transportierens auf die Belichtungsbühne, des Belichtens und des Abtransportierens entsprechende Geschwindigkeit.

3. Verfahren nach einem der Anspüche 1 oder 2, dadurch gekennzeichnet, dass das unbelichtete Kopiermaterial bandförmig bereitgestellt und erst kurz vor dem Transport auf die Belichtungsbühne auf blattförmiges Format zugeschnitten wird.

4. Vorrichtung zum Aufkopieren von Kopiervorlagen auf blattförmiges Kopiermaterial, mit Mitteln zum Abtasten der Kopiervorlage und zur Gewinnung von Abtastwerten, mit Mitteln zur Ermittlung der aufgrund der gewonnenen Abtastwerte erforderlichen Kopierlichtmengen, sowie mit Transportmitteln, welche das unbelichtete blattförmige Kopiermaterial auf die Belichtungsbühne transportieren und nach der Beaufschlagung des Kopiermaterials mit den zuvor ermittelten Kopierlichtmengen zur weiteren Bearbeitung abtransportieren, dadurch gekennzeichnet, dass eine Steuerung (S) vorgesehen ist, die die Transportmittel (812,812a) so steuert, daß das belichtete Stück während seines Abtransports immer noch auf der Bühne ist, während das nächste, unbelichtete Stück auf die Bühne transportiert wird.

5. Vorrichtung nach Anspruch 4, dadurch gekennzeichnet, dass Übergabemittel (U) vorgesehen sind, welche den Transportmitteln (812,812a) nachgeschaltet sind und an welche die Transportmittel das belichtete blattförmige Kopiermaterial nach seinem Abtransport zur Weitergabe an eine nachgeschaltete Vorrichtung, insbesondere an einen Papierprozessor, bzw. zum Weitertransport übergeben, und dass diese Übergabemittel (U) ihrerseits mit Transportmitteln (UR) versehen sind, die das Kopiermaterial mit einer Transportgeschwindigkeit weitergeben, die gleich oder grösser ist als die durchschittliche einem Zyklus des Transportierens auf die Belichtungsbühne, des Belichtens und des Abtransportierens entsprechende Geschwindigkeit.

6. Vorrichtung nach einem der Ansprüche 4 oder 5, dadurch gekennzeichnet, dass ein Speicher (K) zum Bereitstellen des unbelichteten Kopiermaterials in Form eines Bandes vorgesehen ist, sowie Schneidemittel (830,831), die das Band erst kurz vor dem Transport des Kopiermaterials auf die Belichtungsbühne auf ein blattförmiges Format zuschneiden.

## Claims

1. Process to copy photographic copying originals onto photographic copy material in sheet form, in which process the copying original is scanned and on the basis of the scanning values obtained the required quantity of copier light for the next copying of the copying original onto the copy material in sheet form is calculated, in which the following steps are carried out:
a) an unexposed piece of a certain size of the copy material in sheet form is transported onto a platform that is constructed for the exposure of pieces of different sizes of the copy material in sheet form to copier light;
b) the piece is transported on the platform to the copier exposure field;
c) the piece in the copier exposure field is exposed with the previously calculated quantity of light;
d) the exposed piece is removed from the copier exposure field,
characterised in that the exposed piece remains on the platform throughout its removal while the next unexposed piece is transported onto the platform.

2. Process according to Claim 1, characterised in that the exposed copy material in sheet form is passed on to a transfer system (U) after removal, which passes on or transports the copy material to a subsequent station, in particular a paper development station (9), at a transport speed which is equal to or greater than the average speed corresponding to a cycle of transporting to the exposure platform, exposure and removal.

3. Process according to one of Claims 1 or 2, characterised in that the unexposed copy material is provided in the form of a strip and is cut to a sheet format only shortly before transport to the exposure platform.

4. Device to copy from copying originals onto copy material in sheet form with means to scan the copying original and to obtain scanning values, with means to calculate the quantity of light required from the scanning values obtained, and with a transport system that transports the unexposed copy material in sheet form to the exposure platform and after exposure of the copy material to the previously calculated quantity of light removes it for further processing, characterised in that a control unit (S) is provided that controls the transport system (812, 812a) in such a way that during its removal the exposed piece is still on the platform while the next unexposed piece is transported onto the platform.

5. Device according to Claim 4, characterised in that a transfer system (U) is provided that is placed after the transport system (812, 812a) and in which the transport system transfers the exposed copy material in sheet form after its removal for passing on to a subsequent device, in particular to a paper processor, or to further transport, and that this transfer system (U) itself is provided with a transport system (UR) that passes the copy material on at a transport speed that is equal to or greater than the average speed corresponding to a cycle of transport to the exposure platform, exposure and removal.

6. Device according to one of Claims 4 or 5, characterised in that a store (K) is provided to hold the unexposed copy material in the form of a strip, and a cutting system (830, 831) that cuts the strip to sheet format only shortly before transport of the copy material to the exposure platform.

## Revendications

1. Procédé de tirage d'originaux photographiques sur un support de tirage photographique en forme de feuille, procédé dans lequel l'original est analysé et les quantités de lumière de tirage nécessaires pour le tirage ultérieur de l'original sur le support de tirage en forme de feuille sont calculées sur la base des valeurs d'analyse obtenues, les étapes suivantes étant réalisées :
a) un morceau non insolé d'un format déterminé du support de tirage en forme de feuille est disposé sur une plate-forme conçue pour exposer à la lumière de tirage des morceaux de différents formats du support de tirage en forme de feuille ;
b) sur la plate-forme, le morceau est placé sur le trajet des rayons de tirage ;
c) le morceau placé sur le trajet des rayons de tirage est soumis aux quantités de lumière de tirage préalablement calculées, et
d) le morceau insolé est évacué du trajet des rayons de tirage,
caractérisé en ce que, lors de son évacuation, le morceau insolé est encore sur la plate-forme au moment où le morceau suivant non insolé est disposé sur la plate-forme.

2. Procédé selon la revendication 1, caractérisé en ce que, après son évacuation, le support de tirage insolé en forme de feuille est transmis à des moyens de transfert (U) qui le transmettent ou l'acheminent vers une station située en aval, en particulier vers une station de développement de papier (9), à une vitesse de transport qui est égale ou supérieure à la vitesse moyenne correspondant à un cycle comprenant le transport jusqu'à la plate-forme d'insolation, l'insolation et l'évacuation.

3. Procédé selon l'une des revendications 1 ou 2, caractérisé en ce que le support de tirage non insolé est fourni sous forme de bande et n'est découpé au format en forme de feuille que juste avant d'être disposé sur la plate-forme d'insolation.

4. Dispositif de tirage d'originaux sur un support de tirage en forme de feuille, avec des moyens pour analyser l'original et pour obtenir des valeurs d'analyse, avec des moyens pour calculer les quantités de lumière de tirage nécessaires sur la base des valeurs d'analyse obtenues, ainsi qu'avec des moyens de transport qui transportent le support de tirage non insolé en forme de feuille sur la plate-forme d'insolation et, une fois le support de tirage exposé aux quantités de lumière de tirage préalablement calculées, l'évacuent en vue d'un traitement ultérieur, caractérisé en ce qu'il est prévu un module de commande (S) qui commande les moyens de transport (812, 812a) de façon que, lors de son évacuation, le morceau insolé est encore sur la plate-forme au moment où le morceau suivant non insolé est disposé sur la plate-forme.

5. Dispositif selon la revendication 4, caractérisé en ce qu'il est prévu des moyens de transfert (U) qui sont implantés en aval des moyens de transport (812, 812a) et auxquels les moyens de transport transfèrent le support de tirage insolé en forme de feuille après son insolation en vue de le transmettre à un dispositif disposé en aval, en particulier à un dispositif de traitement de papier, ou, respectivement, en vue de l'acheminer plus loin, et en ce que, pour leur part, lesdits moyens de transfert (U) sont munis de moyens de transport (UR) qui transmettent le support de tirage à une vitesse de transport qui est égale ou supérieure à la vitesse moyenne correspondant à un cycle comprenant le transport jusqu'à la plate-forme d'insolation, l'insolation et l'évacuation.

6. Dispositif selon l'une des revendications 4 ou 5, caractérisé en ce qu'il est prévu un magasin (K) destiné à fournir le support de tirage non insolé sous forme de bande, ainsi que des moyens de coupe (830, 831) qui ne découpent la bande à un format en forme de feuille que juste avant le transport du support de tirage sur la plate-forme d'insolation.
